# FASCICULE DE BREVET EUROPEEN

(11) **EP 3 658 418 B1**
(45) Date de publication et mention de la délivrance du brevet: **23.11.2022**
(21) Numéro de dépôt: 18762576.9
(22) Date de dépôt: 25.07.2018
(51) Int. Cl.: B60R 13/08, B29C 44/32

(54) **CAPOT DE PROTECTION ACOUSTIQUE POUR MOTEUR DE VEHICULE AUTOMOBILE**
SCHALLSCHUTZABDECKUNG FÜR KRAFTFAHRZEUGMOTOR
ACOUSTIC PROTECTION COVER FOR MOTOR VEHICLE ENGINE

(30) Priorité: 28.07.2017 FR 1757242
(43) Date de publication de la demande: 03.06.2020
(73) Titulaire: TREVES Products, Services & Innovation, 75008 Paris (FR)
(72) Inventeur: RIBES, Stéphane, 75008 Paris (FR); DEVISMES, Bertrand, 75008 Paris (FR); DREZET, David, 75008 Paris (FR)
(74) Mandataire: Sayettat, Julien Christian
(86) Numéro de dépôt international: PCT/FR2018/051908
(87) Numéro de publication internationale: WO 2019/020941

(56) Documents cités:
- EP-A1- 1 914 406
- EP-A1- 2 574 506
- WO-A1-2016/009158
- WO-A1-2016/181084
- FR-A1- 3 033 746

## Description

L'invention concerne un capot de protection acoustique pour véhicule automobile et un montage d'un tel capot.

Il est connu du document WO-2016/181084, qui correspond au préambule de la revendication 1, de réaliser un capot de protection acoustique pour moteur de véhicule automobile, ledit capot comprenant :
- une coque poreuse d'absorption acoustique à base de fibres reliées entre elles par un agent de liaison,
- une sous-couche de mousse associée en envers de ladite coque sur sensiblement toute sa surface.

La coque peut présenter une rigidité importante et/ou une certaine fragilité, notamment lorsque l'agent de liaison est une résine thermodurcissable, et aussi des dispersions dimensionnelles par rapport à sa définition géométrique nominale.

Il peut alors en résulter des difficultés à monter le capot sur le moteur, et aussi un risque de casse de la coque lorsqu'est menée cette opération de montage. L'invention a pour but de pallier ces inconvénients.

A cet effet, l'invention propose un procédé de montage d'un capot de protection acoustique sur un moteur de véhicule automobile, selon la revendication 1.

On précise ici que le terme « moteur » est utilisé pour désigner le moteur du véhicule dans sa globalité ou une partie de ce dernier : bloc moteur, ligne échappement,...

Quand il est dit que deux parties sont disposées bord à bord de manière à pouvoir débattre, on fait notamment référence à un débattement en rotation et/ou en écartement.

Par « mousse élastiquement déformable » on entend une mousse susceptible d'être comprimée à mi épaisseur et qui recouvre sa géométrie initiale une fois la compression arrêtée, comme c'est le cas pour des mousses utilisées en rembourrage de sièges.

Avec l'agencement proposé, la coque est formée d'une pluralité de parties pouvant débattre l'une par rapport à l'autre, et la sous-couche peut se déformer de manière à suivre le débattement desdites parties entre elles.

Ainsi, malgré le fait que la coque puisse présenter une rigidité importante, le capot peut se déformer élastiquement, ce qui permet de faciliter son montage sur le moteur, malgré des dispersions dimensionnelles éventuelles, tout en évitant une rupture de ladite coque.

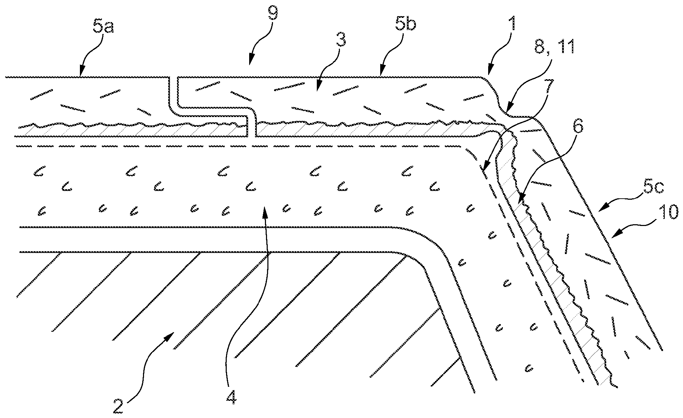

D'autres particularités et avantages de l'invention apparaîtront dans la description qui suit, faite en référence à la figure jointe qui est une vue en coupe schématique partielle d'un montage sur un moteur d'un capot selon une réalisation.

En référence à la figure, on décrit un capot 1 de protection acoustique pour moteur 2 de véhicule automobile, ledit capot comprenant :
- une coque 3 poreuse d'absorption acoustique à base de fibres reliées entre elles par un agent de liaison, ladite coque étant notamment obtenue par thermocompression,
- une sous-couche 4 de mousse associée en envers de ladite coque sur sensiblement toute sa surface,
ledit capot présentant en outre les caractéristiques suivantes :
- ladite coque comprend deux parties 5a,5b,5c disposées bord à bord de manière à pouvoir débattre l'une par rapport à l'autre,
- ladite sous-couche est à base de mousse élastiquement déformable et s'étend entre lesdites parties,
de sorte que ledit capot puisse se déformer élastiquement, afin de faciliter son montage sur ledit moteur tout en évitant une rupture de ladite coque.

Selon une réalisation, la mousse présente une caractéristique de contrainte-déformation relative en compression comprise entre 1 et 12 kPa, et notamment entre 1 et 6 kPa, la mesure étant réalisée pour un enfoncement de 40% de l'épaisseur initiale de l'éprouvette au quatrième cycle de compression, ladite caractéristique étant mesurée selon la norme ISO 3386-1:1986.

Une telle plage de valeurs correspond typiquement à celle connue pour des mousses utilisées pour des capots de protection acoustique.

On rappelle ici que la caractéristique de contrainte-déformation relative en compression est une mesure de l'aptitude à la compression des matériaux déformables.

Elle est ici, comme précisé ci-dessus, définie selon le protocole décrit dans la norme ISO 3386-1:1986 « Matériaux polymères alvéolaires souples », qui prévoit de mesurer la pression à appliquer pour obtenir un enfoncement de 40% de l'épaisseur initiale d'une éprouvette.

Selon une réalisation, la mousse est à base de polyuréthanne.

Selon une réalisation, la mousse, notamment lorsqu'elle est à base de polyuréthanne, présente une densité comprise entre 0,06 et 0,10.

Selon une réalisation, l'agent de liaison est une résine thermodurcissable, notamment phénolique.

Une coque 3 ainsi réalisée est généralement cassante, et la mise en œuvre de l'invention revendiqué trouve alors une pertinence particulière.

En variante, il peut être prévu que l'agent de liaison soit à base de résine thermoplastique.

Selon une variante particulière, l'agent de liaison est formé par des fibres bi-composant, à savoir des fibres comprenant une âme fusible à haute température ou infusible et une gaine fusible à moindre température.

De telles fibres bi-composant peuvent notamment être à base de polyester.

Selon une réalisation, les fibres de la coque 3 - hors fibres bi-composant éventuelles - sont des fibres minérales - notamment de verre, de silice ou de roche.

En variante, il peut être prévu qu'elles soient sous forme de fibres végétales, par exemple en coton.

Selon une réalisation non représentée, il peut être prévu que des grains de particules lourdes - par exemple à base d'élastomère chargé avec de la poudre minérale - soient dispersées au sein des fibres, afin de conférer à la coque 3 une masse accentuée, de sorte que le capot 1 apporte une protection acoustique améliorée.

Selon la réalisation représentée, la sous-couche 4 de mousse surmoule la coque 3 en l'imprégnant sur une partie de son épaisseur de manière à former une croûte 6 réalisant une barrière étanche.

Le capot 1 forme alors un système de protection acoustique d'une part isolant, selon un principe « masse-ressort », où la masse est formée par la coque pourvue de la croûte et le ressort par la sous-couche, et d'autre part absorbant, de par la présence de la partie de ladite coque non imprégnée par ladite mousse.

Selon la réalisation représentée, le capot 1 comprend en outre une couche intercalaire 7 poreuse à la mousse - par exemple à base de non tissé ou de grille - s'interposant entre la coque 3 et la sous-couche 4 de mousse, la mousse de ladite sous-couche traversant ladite couche intercalaire.

Une telle couche intercalaire 7 peut notamment permettre de limiter la pénétration de mousse dans la coque 3, pour lui conserver une épaisseur poreuse maximisée et optimiser ainsi les performances d'absorption acoustique du capot 1.

La couche intercalaire 7 peut également, le cas échéant, contribuer à renforcer la résistance mécanique du capot 1.

La couche intercalaire 7 peut, selon une variante non représentée, être disposée localement entre deux parties 5a,5b afin d'empêcher des fuites de mousse en face d'endroit de la coque 3.

Selon une réalisation non représentée, la sous-couche 4 de mousse est associée à la coque 3 par l'intermédiaire d'un film - notamment en matériau thermoplastique - formant une barrière étanche.

Le capot 1 forme encore ici un système de protection acoustique d'une part isolant, selon un principe « masse-ressort », où la masse est formée par la coque 3 pourvue du film et le ressort par la sous-couche 4, et d'autre part absorbant, de par la présence de la coque poreuse 3.

Selon une autre réalisation non représentée, la sous-couche 4 de mousse est rapportée directement sur la coque 3, par exemple par collage, sans interposition d'une barrière étanche entre les deux, les performances de protection acoustique du capot 1 étant basées sur un principe de « bi-poreux ».

Selon la réalisation représentée, deux parties contigües 5a,5b sont distinctes et disposées en chevauchement, selon un principe de « tuilage ».

Selon la réalisation représentée, les parties 5a,5b se chevauchent selon des zones surcomprimées, de sorte que la coque 3 ne présente pas de surépaisseur en zone de chevauchement.

Selon la réalisation représentée, deux parties contigües 5b,5c sont monobloc, la coque 3 présentant entre lesdites parties une zone rectiligne surcomprimée 8 formant une charnière souple permettant un débattement angulaire desdites parties l'une par rapport à l'autre.

Selon la réalisation représentée, le capot 1 comprend un corps principal 9 - s'étendant ici sur les parties 5a et 5b - et un volet 10 - s'étendant ici selon la partie 5c - se rattachant par une zone linéaire 11 - s'étendant ici selon la zone rectiligne 8 - audit corps, ladite zone formant une charnière permettant que ledit volet puisse passer d'une position déployée, précédant le montage dudit capot sur le moteur 2, à une position rabattue, adoptée une fois monté ledit capot sur ledit moteur.

Selon la réalisation représentée, entre le volet 10 et le corps principal 9, deux parties de coque contigües 5b,5c sont monobloc, comme explicité plus haut.

En variante non représentée, on pourrait prévoir que deux parties de coque contigües 5b,5c soient distinctes, disposées en chevauchement, comme explicité plus haut.

De façon non représentée, il peut être prévu que le capot 1 soit pourvu de moyens de fixation - par exemple sous forme d'orifices - destinés à coopérer avec des moyens réciproques - par exemple sous forme de tiges - prévus sur le moteur 2.

En variante, il peut être prévu un simple emboitement en force du capot 1 sur le moteur 2.

De façon non représentée, la coque 3 et/ou la sous-couche 4 de mousse peut être revêtue d'une couche externe de protection et ou de renforcement par exemple en non tissé.

On décrit à présent un montage d'un tel capot 1 sur un moteur 2 de véhicule automobile, la face extérieure de la sous-couche 4 de mousse présentant une géométrie épousant sensiblement celle dudit moteur, de sorte que ledit capot soit disposé au plus près dudit moteur pour optimiser ses performances de protection acoustique.

Le capot 1 repose ici par sa sous-couche 4 sur le moteur 2, ladite sous-couche permettant un découplage des vibrations dudit moteur.

Selon la réalisation représentée, le capot 1 est pourvu d'un volet 10 rabattu de manière à épouser la forme du moteur.

On décrit à présent un procédé de réalisation d'un capot 1 dont la mousse de la sous-couche 4 pénètre partiellement la coque 3 de manière à former une croûte 6 étanche, ledit procédé comprenant les étapes suivantes :
- réaliser par thermocompression au moins deux parties 5a,5b,5c de coque 3 poreuse à base de fibres mélangées à un agent de liaison activable à chaud,
- disposer bord à bord lesdites parties dans un moule,
- injecter dans la cavité dudit moule un mélange précurseur de mousse élastiquement déformable, de manière à réaliser une sous-couche 4 de mousse surmoulant ladite coque en l'imprégnant sur une partie de son épaisseur de manière à former une croûte 6 formant une barrière étanche,
- après expansion de la mousse, démouler ledit capot obtenu.

En variante, il peut être prévu que la thermocompression se fasse avec superposition d'un film sur les fibres pourvues de l'agent de liaison, un surmoulage par la mousse étant réalisé du côté dudit film.

En autre variante, la sous-couche 4 de mousse peut être directement associée, sans interposition d'une barrière étanche, sur la coque 3.

## Revendications

1. Procédé de montage d'un capot (1) de protection acoustique sur un moteur (2) de véhicule automobile, ledit capot comprenant :
• une coque (3) poreuse d'absorption acoustique à base de fibres reliées entre elles par un agent de liaison,
• une sous-couche (4) de mousse associée en envers de ladite coque sur sensiblement toute sa surface,
ledit capot présentant en outre les caractéristiques suivantes :
• ladite coque comprend deux parties (5a,5b,5c) disposées bord à bord de manière à pouvoir débattre l'une par rapport à l'autre,
• ladite sous-couche est à base de mousse et s'étend entre lesdites parties, ledit procédé étant **caractérisé en ce que** ladite sous-couche est à base de mousse élastiquement déformable de sorte que ledit capot puisse se déformer élastiquement, afin de faciliter son montage sur ledit moteur tout en évitant une rupture de ladite coque, et **en ce que** le capot (1) repose par sa sous-couche (4) sur le moteur (2), la face extérieure de la sous-couche (4) de mousse présentant une géométrie épousant sensiblement celle dudit moteur, de sorte que ledit capot soit disposé au plus près dudit moteur pour optimiser ses performances de protection acoustique.

2. Procédé de montage selon la revendication 1, **caractérisé en ce que** la mousse présente une caractéristique de contrainte-déformation relative en compression comprise entre 1 et 12 kPa, la mesure étant réalisée pour un enfoncement de 40% de l'épaisseur initiale de l'éprouvette au quatrième cycle de compression, ladite caractéristique étant mesurée selon la norme ISO 3386-1:1986.

3. Procédé de montage selon l'une des revendications 1 ou 2, **caractérisé en ce que** l'agent de liaison est une résine thermodurcissable, notamment phénolique.

4. Procédé de montage selon l'une quelconque des revendications 1 à 3, **caractérisé en ce que** les fibres de la coque (3) sont des fibres minérales - notamment de verre, de silice ou de roche.

5. Procédé de montage selon l'une quelconque des revendications 1 à 4, **caractérisé en ce que** la sous-couche (4) de mousse surmoule la coque (3) en l'imprégnant sur une partie de son épaisseur de manière à former une croûte (6) réalisant une barrière étanche.

6. Procédé de montage selon l'une quelconque des revendications 1 à 4, **caractérisé en ce que** la sous-couche (4) de mousse est associée à la coque (3) par l'intermédiaire d'un film formant une barrière étanche.

7. Procédé de montage selon l'une quelconque des revendications 1 à 4, **caractérisé en ce que** la sous-couche (4) de mousse est rapportée directement sur la coque (3) sans interposition d'une barrière étanche.

8. Procédé de montage selon l'une quelconque des revendications 1 à 7, **caractérisé en ce que** deux parties contigües (5a,5b) sont distinctes et disposées en chevauchement.

9. Procédé de montage selon l'une quelconque des revendications 1 à 8, **caractérisé en ce que** deux parties contigües (5b,5c) sont monobloc, la coque (3) présentant entre lesdites parties une zone rectiligne surcomprimée (8) formant une charnière souple permettant un débattement angulaire desdites parties l'une par rapport à l'autre.

10. Procédé de montage selon l'une quelconque des revendications 1 à 9, **caractérisé en ce que** le capot (1) comprend un corps principal (9) et un volet (10) se rattachant par une zone linéaire (11) audit corps, ladite zone formant une charnière permettant que ledit volet puisse passer d'une position déployée, précédant le montage dudit capot sur le moteur (2), à une position rabattue, adoptée une fois monté ledit capot sur ledit moteur.

## Patentansprüche

1. Verfahren zur Montage einer Schallschutzabdeckung (1) auf einem Motor (2) eines Kraftfahrzeugs, wobei die Abdeckung umfasst:
• eine poröse Schallabsorptionsschale (3) auf der Grundlage von Fasern, die durch ein Bindemittel aneinandergebunden sind,
• eine Schaumstoffgrundschicht (4), die auf im Wesentlichen der gesamten Oberfläche an der Unterseite der Schale angebracht ist,
wobei die Abdeckung weiter die folgenden Eigenschaften aufweist:
• die Schale umfasst zwei Teile (5a, 5b, 5c), die derart auf Stoß angeordnet sind, um in Bezug zueinander schwenken zu können,
• die Grundschicht besteht aus Schaumstoff und erstreckt sich zwischen den Teilen, wobei das Verfahren **dadurch gekennzeichnet ist, dass** die Grundschicht auf Grundlage von elastisch verformbarem Schaumstoff ist, sodass sich die Abdeckung elastisch verformen kann, um deren Montage auf dem Motor zu erleichtern, und dabei einen Bruch der Schale zu vermeiden, und dadurch, dass die Abdeckung (1) mit ihrer Grundschicht (4) auf dem Motor (2) aufliegt, wobei die Außenseite der Grundschicht (4) aus Schaumstoff eine Geometrie aufweist, die im Wesentlichen jene des Motors annimmt, sodass die Abdeckung so nahe wie möglich am Motor angeordnet ist, um deren Schallschutzleistungen zu optimieren.

2. Verfahren zur Montage nach Anspruch 1, **dadurch gekennzeichnet, dass** der Schaumstoff eine relative Druckspannungs-Verformungseigenschaft beim Zusammendrücken aufweist, die zwischen 1 und 12 kPa liegt, wobei die Messung für eine Einsenkung von 40% der ursprünglichen Dicke des Prüflings beim vierten Kompressionszyklus ausgeführt wird, wobei die Eigenschaft gemäß der Norm ISO 3386-1:1986 gemessen wird.

3. Verfahren zur Montage nach einem der Ansprüche 1 oder 2, **dadurch gekennzeichnet, dass** das Bindemittel ein wärmehärtendes, insbesondere Phenolharz ist.

4. Verfahren zur Montage nach einem der Ansprüche 1 bis 3, **dadurch gekennzeichnet, dass** die Fasern der Schale (3) Mineralfasern - insbesondere Glas-, Silizium- oder Steinfasern sind.

5. Verfahren zur Montage nach einem der Ansprüche 1 bis 4, **dadurch gekennzeichnet, dass** die Schaumstoffgrundschicht (4) um die Schale (3) herumgeformt ist, indem sie sie auf einem Teil ihrer Dicke durchdringt, um eine Kruste (6) zu bilden, die eine dichte Sperrschicht schafft.

6. Verfahren zur Montage nach einem der Ansprüche 1 bis 4, **dadurch gekennzeichnet, dass** die Schaumstoffgrundschicht (4) anhand einer Folie, die eine dichte Sperrschicht bildet, an der Schale (3) angebracht ist.

7. Verfahren zur Montage nach einem der Ansprüche 1 bis 4, **dadurch gekennzeichnet, dass** die Schaumstoffgrundschicht (4) direkt, ohne Einsetzen einer dichten Sperrschicht an der Schale (3) beigebracht ist.

8. Verfahren zur Montage nach einem der Ansprüche 1 bis 7, **dadurch gekennzeichnet, dass** zwei anliegende Teile (5a, 5b) getrennt und überschneidend angeordnet sind.

9. Verfahren zur Montage nach einem der Ansprüche 1 bis 8, **dadurch gekennzeichnet, dass** zwei anliegende Teile (5b, 5c) einteilig sind, wobei die Schale (3) zwischen den Teilen einen überkomprimierten geradlinigen Bereich (8) aufweist, der ein flexibles Scharnier bildet, das ein winkeliges Schwenken der Teile zueinander ermöglicht.

10. Verfahren zur Montage nach einem der Ansprüche 1 bis 9, **dadurch gekennzeichnet, dass** die Abdeckung (1) einen Hauptkörper (9) und eine Klappe (10) umfasst, die durch einen linearen Bereich (11) an den Körper angebunden ist, wobei der Bereich ein Scharnier bildet, das es ermöglicht, dass die Klappe von einer entfalteten Position, die der Montage der Abdeckung auf dem Motor (2) vorangeht, in eine eingeklappte Position übergeht, die eingenommen wird, sobald die Abdeckung auf dem Motor montiert ist.

## Claims

1. Assembly process of a cover (1) for acoustic protection for a motor vehicle engine (2), said cover comprising:
- a porous sound-absorbing shell (3) made from fibres linked together by a bonding agent,
- a foam sub-layer (4) associated with the back of said shell over substantially the entire surface of same,
said cover further comprising the following features:
- said shell comprises two parts (5a,5b,5c) arranged edge-to-edge so as to be able to move relative to each other,
- said sub-layer is made from foam and extends between said parts, said process being **characterised in that** said sub-layer is made from elastically deformable foam such that said cover can be elastically deformed, in order to facilitate the assembly of same onto said engine while avoiding breaking said shell, and **in that** the cover (1) rests via its sub-layer (4) on the engine (2), the outer face of the sub-layer (4) of foam having a geometry substantially conforming to that of said engine, so that said cover is disposed as close as possible to said engine in order to optimise its performance of acoustic protection.

2. Assembly process according to claim 1, **characterised in that** the foam has a compression stress-strain characteristic comprised between 1 and 12 kPa, the measurement being carried out for a compression of 40% of the initial thickness of the test piece in the fourth compression cycle, said characteristic being measured according to the standard ISO 3386-1:1986.

3. Assembly process according to one of claims 1 or 2, **characterised in that** the bonding agent is a thermosetting resin, in particular phenolic.

4. Assembly process according to any one of claims 1 to 3, **characterised in that** the fibres of the shell (3) are mineral fibres - in particular of glass, of silica or of rock.

5. Assembly process according to any one of claims 1 to 4, **characterised in that** the sub-layer (4) of foam overmoulds the shell (3) while impregnating it over a part of its thickness in such a way as to form a crust (6) creating an impermeable barrier.

6. Assembly process according to any one of claims 1 to 4, **characterised in that** the sub-layer (4) of foam is associated with the shell (3) by means of a film forming an impermeable barrier.

7. Assembly process according to any one of claims 1 to 4, **characterised in that** the sub-layer (4) of foam is added directly onto the shell (3) without interposition of an impermeable barrier.

8. Assembly process according to any one of claims 1 to 7, **characterised in that** two contiguous parts (5a,5b) are distinct and disposed in an overlapping manner.

9. Assembly process according to any one of claims 1 to 8, **characterised in that** two contiguous parts (5b,5c) are one-piece, the shell (3) having between said parts an overcompressed rectilinear zone (8) forming a flexible hinge allowing an angular movement of said parts relative to one another.

10. Assembly process according to any one of claims 1 to 9, **characterised in that** the cover comprises a main body (9) and a shutter (10) being attached by a linear zone (11) to said body, said zone forming a hinge allowing said shutter to be able to go from a deployed position, preceding the assembly of said cover on the engine (2), to a retracted position, adopted once mounted said cover on said engine.
